(19)

Europäisches
Patentamt
European
Patent Office
Office européen
des brevets

(11) **EP 2 809 089 B1**

(12) **EUROPEAN PATENT SPECIFICATION**

(45) Date of publication and mention
of the grant of the patent:
**28.09.2016 Bulletin 2016/39**

(51) Int Cl.:
***H04W 4/00*** *(2009.01)*    ***H04L 29/06*** *(2006.01)*

(21) Application number: **13169972.0**

(22) Date of filing: **31.05.2013**

(54) **Method to determine an appropriate waiting time extension in a listen mode device**

Verfahren zur Bestimmung einer angemessenen Wartezeitverlängerung in einer Hörmodusvorrichtung

Procédé pour déterminer une extension de temps d'attente appropriée dans un dispositif en mode
écoute

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.12.2014 Bulletin 2014/49**

(73) Proprietor: **ST-Ericsson SA
1228 Plan-les-Ouates (CH)**

(72) Inventors:
• **Rangarajan, Anand
821161 Singapore (SG)**
• **Saraswat, Karun
640632 Singapore (SG)**

(74) Representative: **Hutchinson, Thomas Owen
Riviera Patents
27B avenue Joseph Giordan
06200 Nice (FR)**

(56) References cited:
**US-A1- 2009 004 969**

• **"NFC Digital Protocol Technical Specification
NFC Forum", , 17 November 2010 (2010-11-17),
pages 1-175, XP055086545, Retrieved from the
Internet:
URL:http://cwi.unik.no/images/NFC_forum_di
gital_protocol.pdf [retrieved on 2013-11-04]**
• **"Contactless Specifications for Payment
Systems Book D; EMV Contactless
Communication Protocol Specification version
2.3", , 1 February 2013 (2013-02-01), pages 1-121,
XP055086526, Retrieved from the Internet:
URL:http://www.emvco.com/download_agreem
en t.aspx?id=821 [retrieved on 2013-11-04]**
• **"Cards and personal identification ISO/IEC
JTC1/SC17 N 3269 DOCUMENT TYPE: TEXT FOR
FCD BALLOT TITLE: Notification of Ballot:
ISO/IEC FCD 14443-4 (Revision) - Identification
cards - Contactless integrated circuit(s) cards -
Proximity cards - Part 4: Transmission
protocol", , 13 June 2007 (2007-06-13), pages
1-37, XP055086679, Retrieved from the Internet:
URL:http://wg8.de/wg8n1344_17n3269_Ballot_
FCD14443-4.pdf [retrieved on 2013-11-05]**

**Description**

This invention relates to a method for determining the most appropriate waiting time extension in a listen mode device. In particular, but without limitation, the invention relates to the same as applied to Near Field Communication (NFC) enabled devices

As defined in the NFC Communication Protocol Standards (e.g. *"EMV Contactless Communication Protocol Specification"*, *"NFCForum-TS-DigitalProtocol"* and *"Identification cards - Contactless integrated circuit(s) cards -Proximity cards - Part 4: Transmission protocol"*, the Frame Waiting Time (FWT) defines the maximum time within which a Listen Mode (LM) device starts its response frame after the end of a command frame from a Poll Mode (PM) device. Generally speaking, the FWT is defined by the formula $\mathrm{FWT} = 256 \cdot \frac{16}{\mathrm{fc}} \cdot 2^{\mathrm{FWI}}$, where FWI is the Frame Waiting time Integer and fc denotes the 13.56 KHz carrier frequency.

As such, FWI is the only variable, and is a configuration parameter that is effectively fixed by the host (a secure element and/or a mobile application processor hosting the NFC application) or application. As such, the FWT becomes a fixed parameter, giving rise to limited flexibility.

After device activation (a mechanism used by the PM device to detect, select and activate one LM device to start the APDU communication), the Application Protocol Data Unit (APDU) exchanges happen between the protocol level stack (or the application) executing in the host. The NFC controller in the LM device just forwards the APDU received from the remote PM device to the host and starts a timer for the duration of the FWT. If there is no response APDU from the host within the time limit defined by the expiry of the FWT, the NFC controller sends a Waiting Time extension Request S(WTX) to the remote PM device. After receiving the S(WTX) response from the PM device, the LM device has to either send the response APDU before expiry of the published Waiting Time or send another S(WTX). Otherwise, the remote PM device assumes that the LM device is unresponsive and times-out, that is to say, closes the RF connection between the PM and LM device.

The Waiting Time extension (WTX) is expressed in terms of a WTX Multiplier (WTXM) value, which is sent as a parameter within the S(WTX) request. After receiving the S(WTX) the PM device calculates a temporary Frame Waiting Time (FWT$_{temp}$), which only applies to that particular command response exchange. The FWT$_{temp}$ value is expressed as: *FWT$_{temp}$ = FWT. WTXM,* where WTXM is in the range 1 to 59 and should be such that, FWT$_{temp}$ ≤ FWT$_{max}$. To avoid sending frequent S(WTX)s, the optimum choice for WTXM is the value that results in FWT$_{temp}$ = FWT$_{max}$, where, FWT$_{max}$ is calculated using the maximum FWI value as specified in the relevant Communication Protocol standards. The inflexibility of this known approach can give rise to a number of problems in NFC communications.

Chiefly, the above-mentioned inflexibility can give rise to interoperability issues. For example, each of the communication protocol standards defines different values for the value of FWI$_{max}$. For example, *NFC Forum Digital Protocol Version 1.1 Appendix A.7* specifies that FWI$_{max}$ = 8, *EMVCO version(2.2 June 2012), Table A.5* specifies that FWI$_{max}$ = 7, whereas *ISO 14443-4, Section 7.2 Frame Waiting Time* specifies that FWI$_{max}$ = 14. Thus, when different interconnected NFC devices are used together, there is a possibility of premature, or unintentional time-outs, where, for example, one device only waits for

$$FWT_{temp} = FWT_{max} = \frac{4096}{\mathrm{fc}} \cdot 2^{8} \cdot WXTM,$$

whereas the other device delays re-sending a further extension request until

$$FWT_{temp} = FWT_{max} = \frac{4096}{\mathrm{fc}} \cdot 2^{14} \cdot WXTM.$$

In such a situation, one device can time-out prematurely, and can conclude that the connection has been terminated, whereas in fact, the other device is simply waiting for a longer FWT period than the first device expects.

Of course, this problem *could* be solved by all of the connected NFC devices broadcasting their FWT$_{max}$ parameters, but the NCI standard (*NFC Controller Interface (NCI) Specification*) does not currently define a mechanism by which the host device can communicate the WTXM value to the NFC Controller. Likewise, neither does *ETSI HCI standard (ETSI TS 102 622 : Smart Cards; UICC - Contactless Front-end (CLF) Interface; Host Controller Interface (HCI))* provide for communicating the WTXM value from a secure element. Moreover, the LM NFC controller is unable to determine, of its own volition, which standard the remote polling device is compliant with, and hence its FWT$_{max}$ parameter.

As a result, user intervention is normally required before presenting the LM Device to the PM device. The user has to directly or indirectly configure the type of PM device or the type of reader application to which the LM device is presented. Configuration of this parameter frequently occurs "invisibly" to the user, for example, by an application that is configured to work with specific devices, but nevertheless, at some point, the configuration parameter needs to be exchanged in order to ensure correct interoperability between the PM device and the intended LM device.

This in turn translates into a proprietary command, or a proprietary configuration parameter, being sent from the host to the NFC controller so that the NFC controller can then accordingly change the WTXM values.

Known systems that provide for waiting time extensions are described in the following prior art documents:

US2012329393 describes a system whereby the NFC parameters can be updated by a host sending a parameter value query request, and whereby the response from an end-point NFC device is used to configure the NFC parameters;

US2012309303 relates to activation and data exchange between NFC devices whereby a host device can poll a target device for its NFC parameters, so that the two devices can be compatible;

EP2112634 also relates to an NFC system whereby configuration parameters are exchanged between the host and target devices through a secure channel;

KR20080096394 is aimed at reducing delays in data transfer between NFC devices whereby the waiting time is reduced as far as possible;

KR20080099115 is also directed to reducing, not extending, the NFC waiting time; and

US2009/0004969 discusses dynamically assigning a waiting time which is related to the size of an outbound data packet: the larger the packet (measured in bits), the longer the waiting time, and vice versa. US2009/0004969 is directed to speeding-up data transfer in a half-duplex regime (e.g. NFC), but does not address inter-operability problems where the poll mode and listen mode devices are configured according to different NFC protocols.

This invention aims to provide a solution to one or more of the above problems and/or to provide an improved and/or alternative method for determining an appropriate waiting time extension.

According to the invention, there is provided a method as set forth in the appendent claims.

Suitably, in a first embodiment of the invention, the host explicitly configures the type of remote PM device that the LM device's NFC Controller is presented to. In such a situation, the host may use a proprietary mechanism (either as a command or configuration parameter) to communicate this information to the NFC Controller. Upon receiving this configuration, the NFC Controller implementation determines the value for WTXM to be sent to the remote NFC PM device. Such a configuration can be effective, but may complicate integration with an off-the-shelf third party host stack.

Suitably, in a second embodiment of the invention, the value of the configured FWI is used to determine the waiting time extension. Suitably, therefore, the value of the waiting time extension multiplier is 1. Such a configuration may avoid the need for a non-standard configuration parameter or command for setting the value of waiting time extension multiplier, albeit at the expense of a shorter (quicker expiry) wait time extension timer, which could result in more frequent waiting time extension request command exchanges.

The NFC controller dynamically determines the WTXM value to be one that lies within the permissible limits of the communication protocol standard governing a particular transaction.

The host configures the FWI depending on the command processing time for a particular use case. Then, because the frame waiting time integer (FWI) value is a configuration parameter, the NFC Controller can use this value (as exchanged during the LM-PM configuration procedure) to determine a Nearest maximum Frame Waiting time Integer.

$nFWI_{max}$ is rounded up to the maximum value permitted by the communication protocol standards.

Suitably, therefore, where the *EMVCO version(2.2 June 2012), Table A.5* standard is adopted, the configured FWI value can be from 1 to 7, in which case, the $nFWI_{max}$ value is rounded up to 7.

Suitably, therefore, where the *NFC Forum Digital Protocol Version 1.1 Appendix A.7* is adopted, the configured FWI value is 8, in which case, the $nFWI_{max}$ value equals 8.

Suitably, therefore, where the *ISO 14443-4, Section 7.2 Frame Waiting Time* standard is adopted, the configured FWI value can be from 9 to 14, in which case, the $nFWI_{max}$ value rounded up to 14.

Suitably, the NFC controller determines the value of the waiting time extension multiplier using the determined value for $nFWI_{max}$. Suitably, the WTXM value is determined to meet the requirement that $FWT_{temp} \leq nFWT_{max}$, for that exchange. Where

$nFWT_{max} = 256 \cdot \frac{16}{fc} \cdot 2^{nFWI_{max}}$. Suppose configured LM value for frame waiting time is FWI. Then:

$$FWT_{temp} = 256 \cdot \frac{16}{fc} \cdot 2^{FWI} \cdot WTXM.$$

And, since $FWT_{temp} \leq nFWT_{max}$, or $FWT_{temp} = x \cdot nFWT_{max}$ (where $x \leq 1$), $\therefore WTXM = \frac{2^{(nFWI_{max} - fwi)}}{x}$.

However, since WTXM can only be an integer value in the range [0 to 59], x = 1. Hence $WTXM = 2^{(nFWI_{max} - FWI)}$.

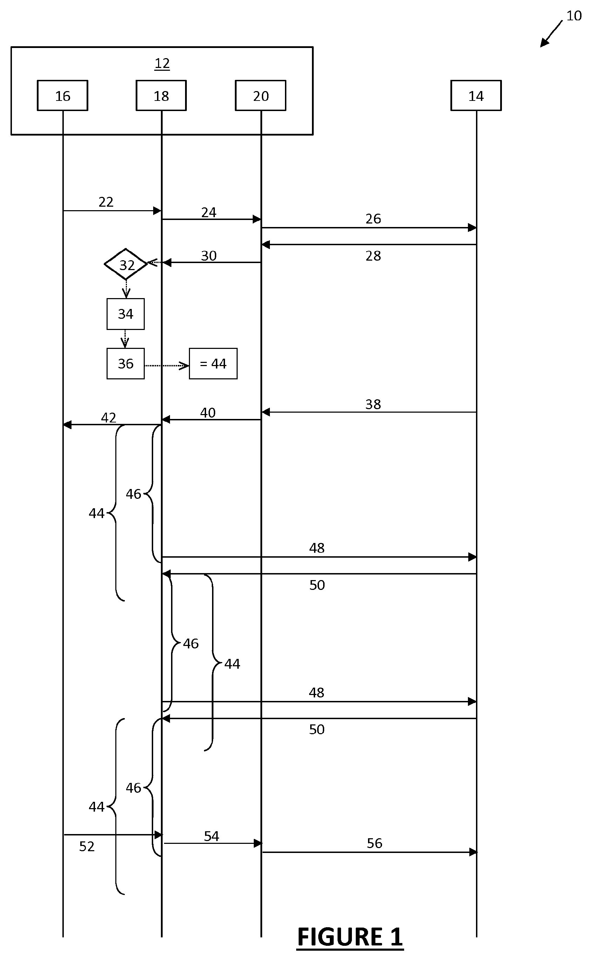

A preferred embodiment of the invention shall now be described, by way of example only, with reference to the accompanying drawing in which Figure 1 is a schematic signaling diagram for an NFC environment in accordance with the invention.

In Figure 1, an NFC environment 10 comprises a listen mode NFC device (LM) 12 in communications range of a poll mode NFC device (PM) 14. The LM 12 comprises a host 16, an NFC interface (NCI) 18 and an RF transceiver 20.

The LM 12 initiates a connection with the PM 14 by sending an activation command 22 to the NCI 18, which is passed 24 to the transceiver 20 for broadcasting an RF activation command signal 26 to the PM 14. The PM 14 receives the activation command signal 26 and responds with an acknowledge packet 28, which is received by the transceiver 20 and passed 30 to the NCI 18. The NCI 18 reads the acknowledgement packet 28 and determines 32 the NFC protocol that was adopted for the activation sequence exchange 26, 28, and hence the applicable NFC protocols for the LM 12 and PM 14 devices. The NCI 18 then extracts the FWI parameter from the exchange 26, 28 and rounds it up 34 to the maximum FWI permitted by the relevant protocol, and then calculates 36 the waiting time extension multiplier for that LM-PM 12, 14 pair.

The PM device 14 then sends a data packet 38 to the LM device 12, and upon receipt of the data packet 38 by the transceiver 20, the data packet 38 is passed 40 to the NCI 18 and on to 40 the host 16.

Upon receipt of the packet 40 by the NCI 18, the NCI 18 starts a timer 44 corresponding to the maximum frame waiting time. If no response is received from the host before the expiry of n times the maximum frame waiting time 46 (n being a number less than 1), the NCI 18 sends a waiting time extension request 48 to the PM device 14, which is acknowledged in a response 50.

Upon receipt of the response 50, the NCI re-starts its timer, and if, after time 46, no response is received by the host 16, a further waiting time extension request 48 is sent to the PM devoice 14, and the process is repeated.

Eventually, the host 16 responds with a data packet 52, which is passed 54 by the NCI 18 to the transceiver 20 and then onto the PM device 14. Upon receipt of the packet 52, the NCI re-sets its timer, and awaits a response from the PM device 14.

The process can be repeated until the data exchange has been completed and the host 16 or PM device 14 terminates the connection.

It will be noted from the foregoing, that the invention enables an appropriate waiting time to be used, depending on the NFC protocol that is adopted by the LM 12 and PM 14 devices. No waiting time extension configuration parameters, per-se, are exchanged, but rather the NIC 18 decides upon an appropriate waiting time extension based on the activation exchange and the response time of the PM device. The waiting time extension is rounded-up to the maximum permitted by the relevant protocol, which reduces the number of waiting time extension requests that need to be sent. Also, NCI is configured to re-send a waiting time extension request before the expiry of the waiting time extension, thus avoiding inadvertent time-outs occurring.

Advantageously, the invention may eliminate the need for additional proprietary configuration parameters or commands between the NFC controller and the host driving the LM transaction; it may reduce the number of unnecessary S(WTX) command responses over the air because the invention makes use of the maximum permissible WTXM value defined in the communication protocol standard governing that particular transaction, which avoids sending frequent S(WTX); and may be relatively easy to implement. In addition, the invention may enable the NFC controller to be compliant with all of the communication protocol standards.

## Claims

1. A method of determining an appropriate data transfer transaction waiting time extension in a system comprising a host (16) and an NFC controller (18), the method comprising dynamically determining (36) a value for a waiting time extension multiplier independently of a waiting time extension multiplier command or configuration parameter sent from the host (16) to the NFC controller (18) **characterised in that**: the NFC controller (18) dynamically determines (36) the waiting time extension multiplier value to be one falling within the permissible limits of the communication protocol standard governing the data transfer transaction (26, 28); the host (16) being adapted to configure a frame waiting time integer depending on the command processing time for the data transfer transaction, the NFC controller using the frame waiting time integer to determine a nearest maximum frame waiting time integer, the nearest maximum frame waiting time integer being rounded-up (34) to the maximum value permitted by the communication protocol standard governing the data transfer transaction (26, 28), and wherein the waiting time extension multiplier is set to a value that results in a temporary frame waiting time being equal to a maximum frame waiting time, the maximum frame waiting time being calculated using the maximum frame waiting interval value as specified in the said Communication Protocol governing the data transfer transaction (26, 28).

2. The method of claim 1, wherein where the communication protocol standard is the *EMVCO version(2.2 June 2012), Table A.5* standard, the configured frame waiting time integer is rounded-up to 7.

3. The method of claim 1, wherein where the communication protocol standard is the *NFC Forum Digital Protocol Version 1.1 Appendix A.7* standard, the configured frame waiting time integer equals 8.

4. The method of claim 1, wherein where the communication protocol standard is the *ISO 14443-4, Section 7.2 Frame Waiting Time* standard, the configured frame waiting time integer is rounded-up to 14.

5. The method of any preceding claim, wherein the NFC controller (18) determines the value of the waiting time extension multiplier using the determined value for the nearest maximum frame waiting time integer.

6. The method of claim 5, wherein the nearest maximum frame waiting time integer value is such that a temporary frame waiting time for the data transfer transaction is less than the maximum frame waiting time as determined by the applicable communications protocol standard.

7. The method of claim 6, wherein *WTXM = 2(nFWI$_{max}$-FWI)*, where WTXM is the waiting time extension multiplier; FWI is the configured frame waiting time integer nFWI$_{max}$ is the nearest maximum frame waiting time integer.

8. The method of any preceding claim, wherein the host (16) explicitly configures the type of remote poll mode device (14) that a listening mode device's (12) NFC controller is presented to by way of a command being the frame waiting time integer, which command is communicated to the host's NFC Controller (18); and wherein upon receipt of the command, the NFC controller (18) determines the value for the waiting time extension multiplier, which waiting time extension multiplier is transmitted to a remote NFC poll mode device.

9. The method of claim 8, wherein the configured frame waiting integer equals 1.

**Patentansprüche**

1. Verfahren zum Bestimmen einer angemessenen Datentransfertransaktions-Wartezeitverlängerung in einem System, welches einen Host (16) und eine NFC-Steuerung (18) umfasst, wobei das Verfahren das dynamische Bestimmen (36) eines Werts für einen Wartezeitverlängerungs-Multiplikator unabhängig von einem Wartezeitverlängerungs-Multiplikatorbefehl oder Konfigurationsparameter umfasst, der von dem Host (16) an die NFC-Steuerung gesendet wird, **dadurch gekennzeichnet, dass:** die NFC-Steuerung (18) dynamisch den Wartezeitverlängerungs-Multiplikatorwert als einen bestimmt, der innerhalb der zulässigen Grenzen des Kommunikationsprotokoll-Standards liegt, durch den die Datentransfertransaktion (26, 28) geregelt wird, wobei der Host (16) dafür geeignet ist, in Abhängigkeit von der Befehlsverarbeitungszeit für die Datentransfertransaktion eine Rahmenwartezeit-Zahl zu konfigurieren, wobei die NFC-Steuerung die Rahmenwartezeit-Zahl verwendet, um eine nächstgelegene maximale Rahmenwartezeit-Zahl zu bestimmen, wobei die nächstgelegene maximale Rahmenwartezeit-Zahl auf den maximalen Wert aufgerundet wird (34), der nach dem Kommunikationsprotokoll-Standard zulässig ist, durch den die Datentransfertransaktion (26, 28) geregelt wird, und wobei der Wartezeitverlängerungs-Multiplikator auf einen Wert gesetzt wird, der zu einer temporären Rahmenwartezeit führt, die gleich einer maximalen Rahmenwartezeit ist, wobei die maximale Rahmenwartezeit unter Verwendung des maximalen Rahmenwarteintervalls berechnet wird, wie in dem Kommunikationsprotokoll spezifiziert, durch welches die Datentransfertransaktion (26, 28) geregelt wird.

2. Verfahren nach Anspruch 1, wobei, wo der Kommunikationsprotokoll-Standard der *EMVCO-Version(2.2 Juni 2012)-Table-A.5*-Standard ist, die konfigurierte Rahmenwartezeit-Zahl auf 7 aufgerundet wird.

3. Verfahren nach Anspruch 1, wobei, wo der Kommunikationsprotokoll-Standard der *NFC-Forum-Digital-Protocol-Version-1.1-Appendix-A.7-Standard* ist und die konfigurierte Rahmenwartezeit-Zahl 8 entspricht.

4. Verfahren nach Anspruch 1, wobei, wo der Kommunikationsprotokoll-Standard der *ISO-14443-4-Section-7.2-Frame-Waiting-Time*-Standard ist, die konfigurierte Rahmenwartezeit-Zahl auf 14 aufgerundet wird.

5. Verfahren nach einem der vorhergehenden Ansprüche, wobei die NFC-Steuerung (18) den Wert des Wartezeitverlängerungs-Multiplikators unter Verwendung des bestimmten Werts für die nächstgelegene maximale Rahmenwartezeit-Zahl bestimmt.

6. Verfahren nach Anspruch 5, wobei der Wert der nächstgelegenen maximalen Rahmenwartezeit-Zahl ein solcher ist, dass eine temporäre Rahmenwartezeit für die Datentransfertransaktion kürzer ist als die maximale Rahmenwartezeit, bestimmt durch den anwendbaren Kommunikationsprotokoll-Standard.

7. Verfahren nach Anspruch 6, wobei WTXM = 2(nFWI$_{max}$-FWI), wobei WTXM der Wartezeitverlängerungs-Multiplikator ist; FWI die konfigurierte Rahmenwartezeit-Zahl ist und nFWI$_{max}$ die nächstgelegene maximale Rahmenwartezeit-Zahl ist.

8. Verfahren nach einem der vorhergehenden Ansprüche, wobei der Host (16) mittels eines Befehls, bei dem es sich um die Rahmenwartezeit-Zahl handelt, explizit den Typ der entfernten Abfragemodusvorrichtung (14) konfiguriert, dem eine NFC-Steuerung einer Hörmodusvorrichtung (12) vorgelegt wird, wobei der Befehl der NFC-Steuerung (18) des Host übermittelt wird; und wobei die NFC-Steuerung (18) nach dem Empfang des Befehls den Wert für den Wartezeitverlängerungs-Multiplikator bestimmt, wobei der Wartezeitverlängerungs-Multiplikator an eine entfernte NFC-Abfragemodusvorrichtung gesendet wird.

**9.** Verfahren nach Anspruch 8, wobei die konfigurierte Rahmenwartezeitzahl 1 entspricht.

## Revendications

**1.** Procédé pour déterminer une extension appropriée de temps d'attente lors de la transaction du transfert de données dans un système comprenant un hôte (16) et un contrôleur NFC (18), le procédé comprenant la détermination dynamique (36) d'une valeur pour un multiplicateur d'extension de temps d'attente indépendamment d'un paramètre de configuration ou d'une commande du multiplicateur d'extension de temps d'attente envoyé(e) par l'hôte (16) au contrôleur NFC (18), **caractérisé en ce que** : le contrôleur NFC (18) détermine dynamiquement (36) la valeur du multiplicateur d'extension de temps d'attente pour qu'elle tombe dans les limites admissibles de la norme du protocole de communication régissant la transaction du transfert de données (26, 28) ; l'hôte (16) étant adapté pour configurer un nombre entier du temps d'attente de trame d'activation en fonction du temps de traitement de la commande pour la transaction de transfert de données, le contrôleur NFC utilisant le nombre entier du temps d'attente de trame d'activation pour déterminer un nombre entier du temps d'attente de trame d'activation maximum le plus proche, le nombre entier du temps d'attente de trame d'activation maximum le plus proche étant arrondi (34) à la valeur maximale autorisée par la norme du protocole de communication régissant la transaction de transfert de données (26, 28), et le multiplicateur d'extension de temps d'attente étant défini à une valeur résultant en un temps d'attente de trame d'activation temporaire égal à un temps d'attente de trame d'activation maximum, le temps d'attente de trame d'activation maximum étant calculé à l'aide de la valeur de l'intervalle d'attente de trame d'activation maximum comme indiqué dans ledit protocole de communication régissant la transaction de transfert de données (26, 28).

**2.** Procédé selon la revendication 1, dans lequel le nombre entier du temps d'attente de trame d'activation configuré est arrondi à 7 lorsque la norme du protocole de communication est la norme *EMVCO (version 2.2 juin 2012), Tableau A.5.*

**3.** Procédé selon la revendication 1, dans lequel le nombre entier du temps d'attente de trame d'activation configuré est égal à 8 lorsque la norme du protocole de communication est le *protocole numérique NFC Forum Version 1.1 Annexe A.7.*

**4.** Procédé selon la revendication 1, dans lequel le nombre entier du temps d'attente de trame d'activation configuré est arrondi à 14 lorsque la norme du protocole de communication est la norme *ISO 14443-4 Section 7.2 Temps d'attente de trame d'activation.*

**5.** Procédé selon l'une quelconque des revendications précédentes, dans lequel le contrôleur NFC (18) détermine la valeur du multiplicateur d'extension de temps d'attente à l'aide de la valeur déterminée pour le nombre entier du temps d'attente de trame d'activation maximum le plus proche.

**6.** Procédé selon la revendication 5, dans lequel la valeur du nombre entier du temps d'attente de trame d'activation maximum le plus proche est telle que le temps d'attente de trame d'activation temporaire pour la transaction du transfert de données est inférieur au temps d'attente de trame d'activation maximum déterminé par la norme du protocole de communication applicable.

**7.** Procédé selon la revendication 6, dans lequel WTXM = $2^{(nFWI_{max}-FWI)}$, sachant que WTXM est le multiplicateur de l'extension de temps d'attente ; FWI est le nombre entier du temps d'attente de trame d'activation configuré ; $nFWI_{max}$ est le nombre entier du temps d'attente de trame d'activation maximum le plus proche.

**8.** Procédé selon l'une quelconque des revendications précédentes, dans lequel l'hôte (16) configure explicitement le type de dispositif distant (14) en mode poll de façon qu'un contrôleur NFC du dispositif (12) en mode écoute soit présenté au moyen d'une commande correspondant au nombre entier du temps d'attente de trame d'activation, ladite commande étant communiquée au contrôleur NFC (18) de l'hôte ; et dans lequel, à la réception de la commande, le contrôleur NFC (18) détermine la valeur pour le multiplicateur d'extension de temps d'attente, lequel multiplicateur d'extension de temps d'attente est transmis à un dispositif NFC distant en mode poll.

**9.** Procédé selon la revendication 8, dans lequel le nombre entier d'attente de trame d'activation configuré est égal à 1.

10

12

16    18    20    14

22    24    26
28
30    32
34
36    = 44

38
42    40

46
44

48

50

46
44

48

50

46
44

52    54    56

**FIGURE 1**

**EP 2 809 089 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012329393 A
- US 2012309303 A
- EP 2112634 A
- KR 20080096394
- KR 20080099115
- US 20090004969 A